# EUROPEAN PATENT APPLICATION

(11) **EP 1 541 365 A1**
(43) Date of publication of application: **15.06.2005**
(21) Application number: 03794153.1
(22) Date of filing: 29.08.2003
(51) Int. Cl.: B41J 29/38, B41J 29/00, B41J 2/175, G06F 3/12

(54) **PRINTER AND CARTRIDGE**

(30) Priority: 02.09.2002 JP 2002256572
(71) Applicant: SEIKO EPSON CORPORATION, Tokyo 160-0811 (JP)
(72) Inventor: HANAOKA, Masaaki, c/o SEIKO EPSON CORPORATION, Suwa-shi, Nagano 392-8502 (JP)
(74) Representative: Winter, Brandl, Fürniss, Hübner, Röss, Kaiser, Polte Partnerschaft Patent- und Rechtsanwaltskanzlei
(86) International application number: PCT/JP2003/011129
(87) International publication number: WO 2004/022349

(57) **Abstract**

The technique of the invention provides a user with a rental printer and gives adequate maintenance support of the printer.

In a printer rental service system of the invention, a service center provides each registered legal user with a rental printer, which works only with entry of an authorized use permit ID allocated to each printer and executes printing operation with only a dedicated ink cartridge directly delivered from the service center.

## Description

### Technical Field

The present invention relates to a printing device and a cartridge.

### Background Art

The use of printers for printing various data has been expanding with the spread of personal computers, digital cameras, and the Internet. The printers are typically owned by the respective users, and each user manages supplies of expendables, such as inks and toners, and other maintenance works.

The inadequate maintenance of an inkjet printer, for example, use of inadequate ink or insufficient cleaning of a print head, results in abnormal operations or poor printing results. The continued adequate maintenance is rather a heavy burden to the user.

In order to eliminate such drawbacks, the technique of the invention aims to provide a user with a rental printer and gives maintenance support of the printer.

### Disclosure of the Invention

In order to attain at least part of the above and the other related objects, the present invention is directed to a first printing device, which includes: an identification information storage module that stores a predetermined piece of identification information for identifying the printing device; a use permit information input module that receives an entry of a predetermined piece of use permit information, which is correlated to the identification information and is authorized for approval of use of the printing device; and a control module that prohibits the use of the printing device in the case of unauthorized use permit information.

The 'identification information' is, for example, a production number of the printing device or a MAC address intrinsically allocated to the printing device. The technique of this invention provides the use permit information correlated to the identification information or allocated to each printing device. The use permit information may be a letter string or a program. Only a legal user authorized for use of the printing device can receive this use permit information through predetermined proceedings. The use of the printing device is prohibited in the case of the unauthorized use permit information. This arrangement desirably excludes illegal use of the printing device by any unauthorized user and guarantees the use of the printing device by only the legal user. The technique of the invention accordingly provides a user with a rental printing device and gives adequate maintenance support of the printing device.

The use permit information may be of unlimited duration or may have an expiration date, which is set and updated according to the requirements. Setting the expiration date in the use permit information effectively prevents illegal sale of the printing device with approval for its use.

In the printing device of the invention, the use permit information may be entered by any of various methods. For example, the use permit information given to the user by post, by telephone, or by facsimile may be input by the user's keyboard entry or by the user's entry of another input device. The use permit information may otherwise be read automatically from a recording medium, such as a magnetic card or a floppy disk.

In one preferable embodiment of the invention, the first printing device may further include a communication module that makes preset communication with a specific server via a network. The communication module sends the identification information to the specific server and receives the use permit information from the specific server.

This arrangement enables the user of the printing device to easily receive the use permit information correlated to the identification information, thus enhancing the convenience of the user.

The communication between the printing device and the server may be made at ever time of activation of the printing device, at every time of replacement of a cartridge of a printing material attached to the printing device, or at any preset time intervals, for example, once a month or once a week.

The present invention is also directed to a second printing device, which includes: an identification information storage module that stores a predetermined piece of identification information for identifying the printing device; a communication module that transmits the identification information to a specific server via a network; and a control module that approves use of the printing device on completion of the transmission of the identification information.

The second printing device sends the identification information to the specific server to receive the approval for the use of the printing device. Namely the second printing device is not allowed to execute printing operation without transmission of the identification information to the specific server. Communication with the server locates the printing device. An illegal user generally hesitates to have such communication with the server. This arrangement thus desirably excludes illegal use of the printing device by any unauthorized user and guarantees the use of the printing device by only the legal user. The technique of the invention accordingly provides the user with a rental printing device and gives adequate maintenance support of the printing device. The arrangement also prevents illegal sale of the printing device.

In one preferable embodiment of the invention, the printing device with the communication module further includes an authentication information input module that receives an entry of a predetermined piece of authentication information, which is used to certify an authorized use of the printing device. The communication module sends the authentication information to the specific server and receives a result of authentication based on the authentication information from the specific server. The control module prohibits the use of the printing device when the result of authentication shows failed certification of the authentication information.

This arrangement more effectively excludes any unauthorized use of the printing device.

The printing device with the communication module may further include an accounting-related information management module that manages a predetermined piece of accounting-related information, which is used in a specified accounting procedure executed by the specific server to charge for the use of the printing device. The communication module additionally sends the accounting-related information to the specific server.

A known printing device rental service charges the user for the use of the rental printing device, for example, according to the consumption of ink or toner or the number of print pages. This arrangement enhances the convenience of the accounting process in this printing device rental service.

The present invention is further directed to a third printing device with a cartridge of a printing material attached thereto. The cartridge has a storage element that stores a predetermined piece of cartridge information for identifying a delivery channel of the cartridge. The third printing device includes: an information acquisition module that acquires the cartridge information from the storage element of the cartridge; and a screening module that approves or prohibits use of the printing device, based on the acquired cartridge information.

As described above, neither the normal operations of the printing device nor the good printing results are guaranteed under the condition of attachment of an inadequate cartridge to the printing device. The normal operations of the printing device are also not guaranteed under the condition of an unauthorized delivery channel of the cartridge, since the cartridge may be illegally altered or changed. The printing device of the invention determines approval or prohibition of its use based on the delivery channel of the cartridge and approves its use with only the cartridge legally delivered by the authorized delivery channel. This guarantees the normal operations of the printing device and gives adequate maintenance support of the printing device.

The delivery channel may be, for example, store sales via a third person or direct sales without any third person and does not represent the manufacturer of the cartridge. Any cartridge delivered by store sales can not be used in the printing device that approves its use with only a cartridge delivered by direct sales, even when the manufacturer is the same.

There are a wide variety of cartridges corresponding to various models of printing devices. The user may purchase a wrong cartridge by store sales. The printing device of the invention may be designed to approve its use with only the cartridge delivered by direct sales. This arrangement enables the seller of the cartridge to provide the user with an adequate cartridge through appropriate user management and prevents wrong use of any inadequate cartridge.

In the initial state, the third printing device of the invention may be set in the prohibited state of its use. It is preferable that the screening module approves the use of the printing device when the cartridge information represents a selected delivery channel.

It is also preferable that the screening module prohibits the use of the printing device when the cartridge information does not represent a selected delivery channel, for example, in the case of replacement of the cartridge.

This arrangement effectively excludes the use of any inadequate cartridge and gives appropriate maintenance support of the printing device.

In one preferable embodiment of the invention, the third printing device further includes: an accounting-related information management module that manages a predetermined piece of accounting-related information, which is used in a specified accounting procedure executed by a specific server to charge for the use of the printing device; and a communication module that sends the accounting-related information to the specific server.

This arrangement enhances the convenience of the accounting process in the printing device rental service.

Another application of the present invention is a cartridge attached to the third printing device of the invention. The invention is accordingly directed to a cartridge for keeping a printing material therein. The cartridge has a storage element that stores a predetermined piece of cartridge information for identifying a delivery channel of the cartridge.

This structure of the cartridge enables the third printing device of the invention to exclude the use of any inadequate cartridge supplied by an unauthorized delivery.

In the cartridge of the invention, the storage element may additionally store a type of the printing material.

The type of the printing material may be a dye ink or a pigment ink kept in an ink cartridge attached to an inkjet printer. The storage of the type of the printing material effectively prevents the printing device from using any wrong cartridge of an unsuitable printing material.

In the cartridge of the invention, the storage element may additionally store a remaining quantity of the printing material.

The storage of the remaining quantity of the printing material desirably prevents a potential printing failure due to an insufficient remaining quantity of the printing material, malfunction of a print head, and other relevant potential troubles.

The cartridge of the invention may additionally include a remaining quantity measurement module that measures the remaining quantity of the printing material.

This arrangement ensures accurate measurement of the remaining quantity of the printing material.

In the cartridge of the invention, the storage element may be a non-contact IC.

The use of the non-contact IC desirably prevents a potential contact failure at a contact of the cartridge with the printing device and other relevant potential troubles.

The technique of the invention is not restricted to the printing device or the cartridge attached to the printing device, but is also actualized by a control method of the printing device, a computer program for controlling the printing device, a recording medium in which such a computer program is recorded, a data signal that includes such a computer program and is embodied in a carrier wave, and diversity of other adequate applications. Any of the additional arrangements discussed above may be adopted in any of these applications.

In the application of the computer program or the recording medium in which the computer program is recorded, the computer program may be constructed as a whole program for driving the printing device or as a program code for exerting only the essential functions of the invention. Typical examples of the recording medium include flexible disks, CD-ROMs, DVD-ROMs, magneto-optical disks, IC cards, ROM cartridges, punched cards, prints with barcodes or other codes printed thereon, internal storage devices (memories, such as RAMs and ROMs) and external storage devices of the computer, and diversity of other computer readable media.

### Brief Description of the Drawings

Fig. 1 schematically illustrates the outline of a printer rental service system with a printing device of the invention;
Fig. 2 shows one example of user information managed by a user information management module 260;
Fig. 3 shows one example of cartridge information stored in an EEPROM included in a non-contact IC 310 of an ink cartridge 300;
Fig. 4 schematically illustrates the structure of a printer 100;
Fig. 5 is a flowchart showing a use permit screening process of the printer 100;
Fig. 6 is a flowchart showing the details of authentication of the ink cartridge 300;
Fig. 7 is a flowchart showing the details of use permit screening with a use permit ID; and
Fig. 8 is a flowchart showing an accounting process.

### Best Modes of Carrying Out the Invention

One mode of carrying out the invention is described below in the following sequence as a preferred embodiment:
A. Printer Rental Service
B. Structure of Printer
C. Printer Use Permit Screening Process
   C-1. Authentication of Ink Cartridge
   C-2. Use Permit Screening with Use Permit ID
D. Accounting Process
E. Modifications

### A. Printer Rental Service

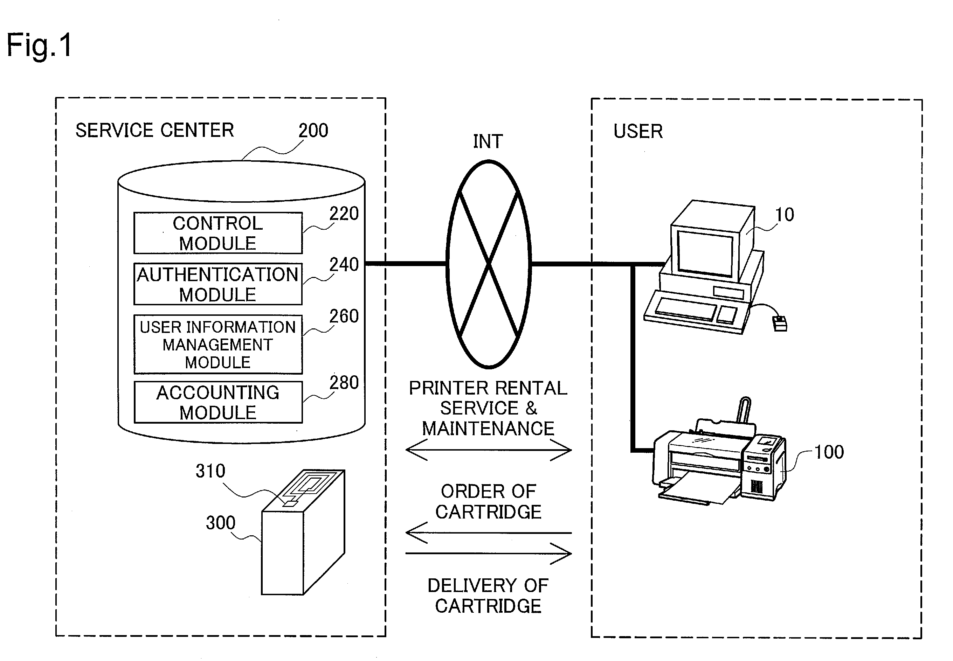

Fig. 1 schematically illustrates the outline of a printer rental service system with a printing device of the invention. In this printer rental service system, a service center provides each user who has been registered in a predetermined form with a rental printer 100 in response to the user's request and gives maintenance support of the printer 100. The user is asked to register the required pieces of information including the user's name, a user ID, a password, and a credit card number in the service center to receive the printer rental service.

In the illustrated printer rental service system, the user's general-purpose personal computer 10 and the printer 100 are linked to a server 200 in the service center via the Internet INT to establish communication. The user may make a request for the printer rental service and make an order of any relevant expendables via the Internet, as well as by post, by telephone, or by facsimile.

In this embodiment, the printer 100 as a rental object is an inkjet printer. The service center provides each registered user with a dedicated ink cartridge 300 for the printer rental service and charges the user for the consumption of ink in the ink cartridge 300. The dedicated ink cartridge 300 for the printer rental service guarantees the use of only the authenticated ink cartridge. This enables the service center to give appropriate maintenance support of the printer 100 and to accurately charge the user for the consumption of ink.

The illustration of Fig. 1 includes the functional blocks of the server 200 in the service center. The server 200 includes a control module 220, an authentication module 240, a user information management module 260, and an accounting module 280. These functional blocks are attained by the software configuration.

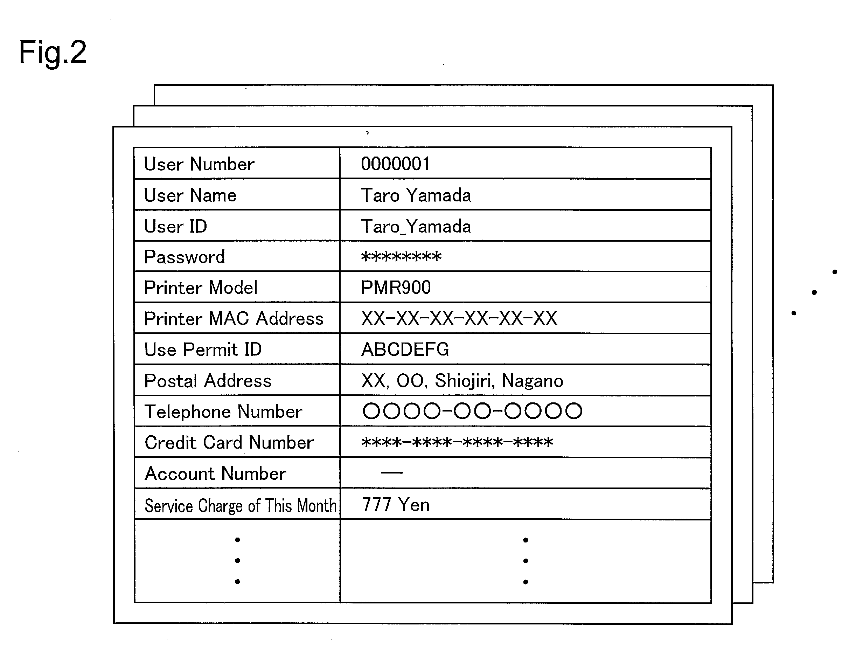

The control module 220 controls the operations of the respective functional blocks in the server 200 and takes charge of external communication via the Internet INT. The authentication module 240 authenticates each user as a legal user registered in the service center. The user is authenticated by the user ID and the password in this embodiment, although other pieces of information may be used for the authentication. The user information management module 260 manages pieces of information with regard to the users who use the printer rental service and the printers rented by the users (see Fig. 2). The accounting module 280 charges each user for the consumption of ink in the printer 100.

Fig. 2 shows one example of user information managed by the user information management module 260. As illustrated, the user information management module 260 manages a user number assigned to each user, the user's name, a user ID and a password required for authentication, a model and a MAC address of the printer rented by the user, a use permit ID allocated to the MAC address, the postal address and the telephone number of the user, and accounting-related information in the form of a database. The MAC address corresponds to the identification information of the invention, and the use permit ID corresponds to the use permit information of the invention.

As mentioned previously, the dedicated ink cartridge 300 for the printer rental service is attached to the printer 100 of the embodiment. The ink cartridge 300 has a non-contact IC 310 that establishes communication with the printer 100 by radio waves. The non-contact IC 310 includes a loop antenna used to make communication with the printer 100 and generate induced electromotive force through electromagnetic induction, a charge pump used to boost up the induced electromotive force and give the power supply to the respective elements in the non-contact IC 310, an EEPROM used to store various pieces of cartridge information, a remaining ink level sensor used to measure the remaining ink level, and a microcomputer used to control the operations of the respective elements in the non-contact IC 310.

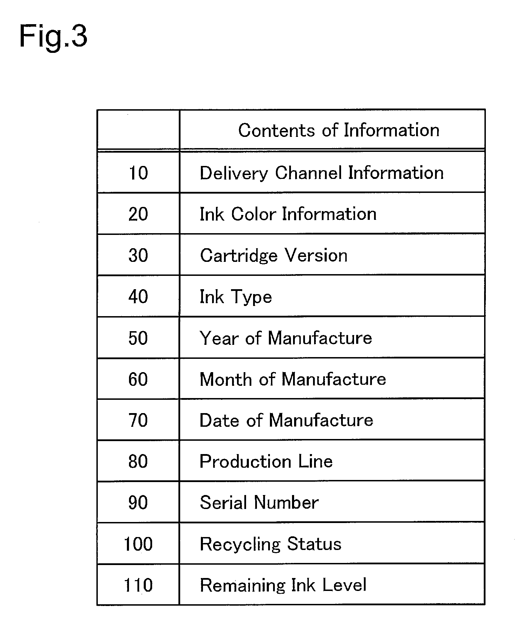

Fig. 3 shows one example of the cartridge information stored in the EEPROM included in the non-contact IC 310 of the ink cartridge 300. The EEPROM stores delivery channel information, ink color information, a version of the ink cartridge, an ink type, the year, the month, and the date of manufacture of the ink cartridge, a production line, a serial number, a recycling status, and a remaining ink level.

Information for identifying the dedicated ink cartridge 300 for the printer rental service provided to the user directly by the service center is stored in the storage area of the delivery channel information. In this embodiment, a value '1' is allocated to the dedicated ink cartridge 300 for the printer rental service, whereas a value '0' is allocated to conventional ink cartridges available from general stores. The remaining ink level measured by the remaining ink level sensor is stored in the storage area of the remaining ink level.

### B. Structure of Printer

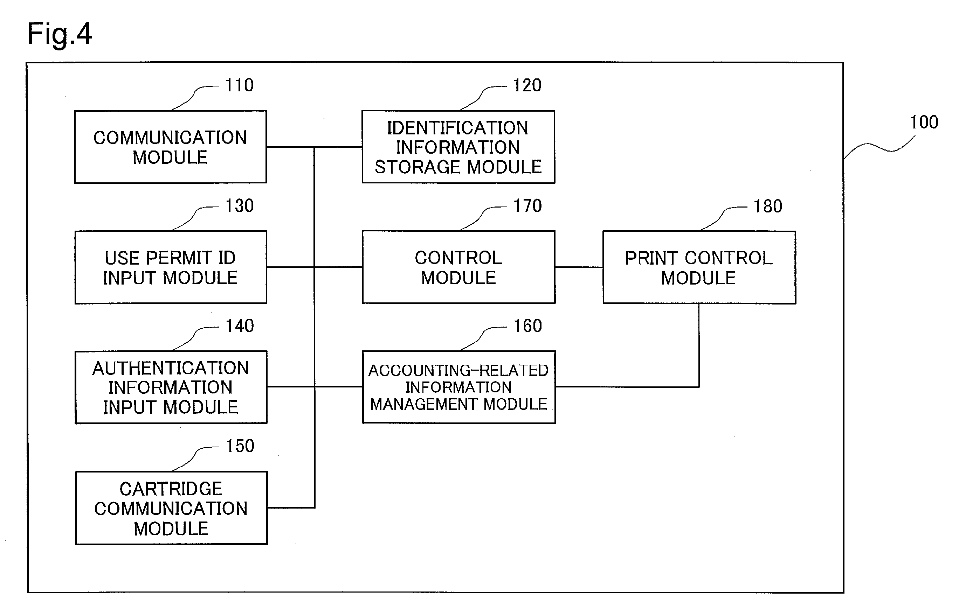

Fig. 4 schematically illustrates the structure of the printer 100. The printer 100 includes a CPU, a RAM, and a ROM (not shown), and has various functional blocks attained by the software configuration in the ROM. The functional blocks may alternatively be actualized by the hardware configuration. The hardware structure of the printer 100 is not specifically illustrated nor described here.

A communication module 110 takes charge of data transmission to and from the server 200 in the service center as described later.

An identification information storage module 120 stores a MAC address intrinsically allocated to the printer 100 as identification information for identifying the printer 100. The identification information may be any other piece of information corresponding to the storage in the server 200, for example, a production number of the printer 100.

A use permit ID input module 130 receives an external entry of a use permit ID used in the use permit screening process of the printer 100 as discussed later. In the structure of this embodiment, the use permit ID sent from the server 200 to the communication module 110 is automatically entered into the use permit ID input module 130. The use permit ID may otherwise be input by the user's keyboard entry of the personal computer 10 or by the user's operation panel entry of the printer 100 or may be read from a recording medium, such as a magnetic card, with the use permit ID recorded therein.

An authentication information input module 140 receives an entry of the user ID and the password used for authentication executed by the server 200. In this embodiment, the user ID and the password are input by the user's keyboard entry of the personal computer 10.

A cartridge communication module 150 makes preset communication with the non-contact IC 310 of the ink cartridge 300 attached to the printer 100. For example, the cartridge communication module 150 reads the cartridge information from the EEPROM of the non-contact IC 310.

An accounting-related information management module 160 manages a predetermined piece of accounting-related information used for an accounting process executed by the server 200. In this embodiment, the accounting-related information is the consumption of ink. The consumption of ink is computed from the size and the number of ink droplets ejected from a print head. The consumption of ink may otherwise be calculated from the previous remaining ink level and the current remaining ink level before and after a printing operation, which are measured by the remaining ink level sensor of the ink cartridge 300. The accounting-related information may be the number of print pages.

A control module 170 controls the respective functional blocks in the printer 100. The control module 170 stores in advance a use permit ID, which is to be compared with the external entry of the use permit ID, and executes a use permit screening process of the printer 100 described later.

A print control module 180 executes required series of processing related to the printing operation of the printer 100, for example, image processing and drive control of the print head. The print control module 180 also computes the consumption of ink for printing and sends the computed consumption of ink to the accounting-related information management module 160.

The personal computer 10 may be set to include part of these functional blocks.

### C. Printer Use Permit Screening Process

In the initial state, the printer 100 is prohibited from executing a printing operation. The printer rental service system of the embodiment executes a use permit screening process of the printer 100 according to preset conditions. This printer use permit screening process effectively excludes the use of any unauthenticated ink cartridge and the use of the printer 100 by any unauthorized user.

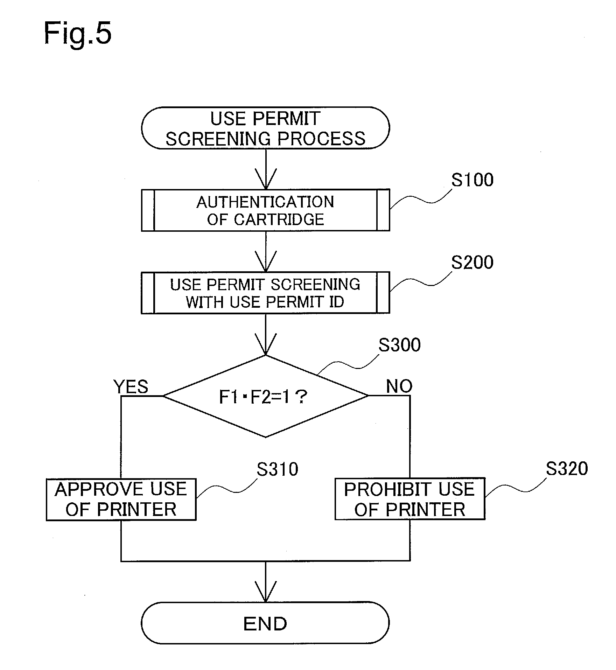

Fig. 5 is a flowchart showing a use permit screening process of the printer 100. The printer 100 first executes authentication of the ink cartridge 300 to exclude the use of any inadequate ink cartridge (step S100), and is then subjected to use permit screening with the use permit ID to exclude the use of the printer 100 by any unauthorized user (step S200). The details of these steps will be discussed later. The use of the printer 100 is approved or prohibited, based on the combination of the result of the authentication at step S 100 (expressed by a flag F1) and the result of the use permit screening with the use permit ID at step S200 (expressed by a flag F2) (step S300). When the flags F1 and F2 satisfy an equation of F1·F2 =1, the use of the printer 100 is approved (step S310). When the flags F 1 and F2 satisfy an equation of F1·F2 =0, on the other hand, the use of the printer 100 is prohibited (step S320). The structure of this embodiment keeps the print head stationary to prohibit the printer 100 from executing a printing operation. Another method, for example, prohibited entry of print data to the printer 100, may be adopted to prevent the printing operation of the printer 100.

### C-1. Authentication of Ink Cartridge

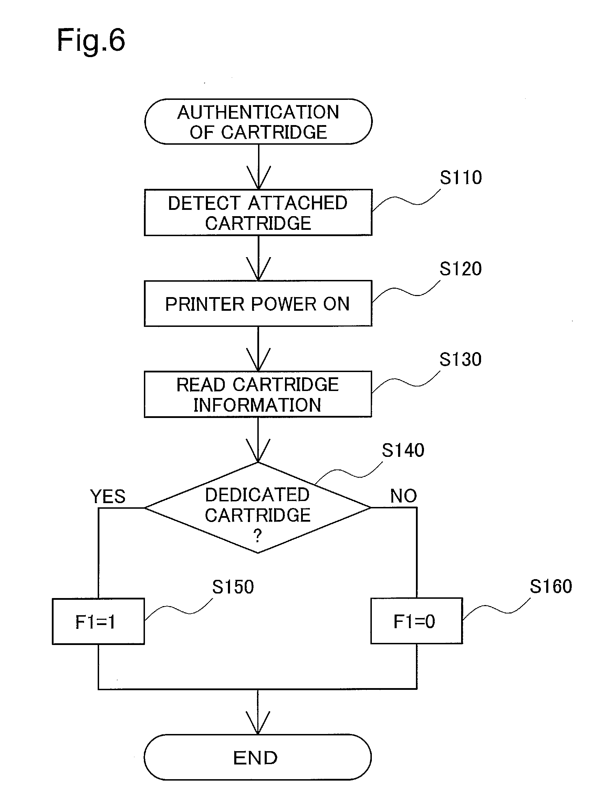

Fig. 6 is a flowchart showing the details of the authentication of the ink cartridge 300 executed at step S100 in the flowchart of Fig. 5. In response to detection of an ink cartridge attached to the printer 100 (step S110) and a power ON operation of the printer 100 (step S120), the printer 100 reads the delivery channel information from an EEPROM included in a non-contact IC of the attached ink cartridge (step S130). The printer 100 then determines whether the attached ink cartridge is the dedicated ink cartridge 300 for the printer rental service, based on the delivery channel information (step S140). When the determination result of step S140 shows that the attached ink cartridge is the dedicated ink cartridge 300 for the printer rental service on the basis of the setting '1' of the delivery channel information, the printer 100 sets a value '1' to the flag F 1 (F =1) to approve the use of the printer 100 (step S150). When the determination result of step S140 shows that the attached ink cartridge is not the dedicated ink cartridge 300 for the printer rental service on the basis of the setting '0' of the delivery channel information, the printer 100 sets a value '0' to the flag F 1 (F1 =0) to prohibit the use of the printer 100 (step S160). In this embodiment, this authentication is executed on ever power supply to the printer 100. The authentication may alternatively be executed on every replacement of the attached ink cartridge.

### C-2. Use Permit Screening with Use Permit ID

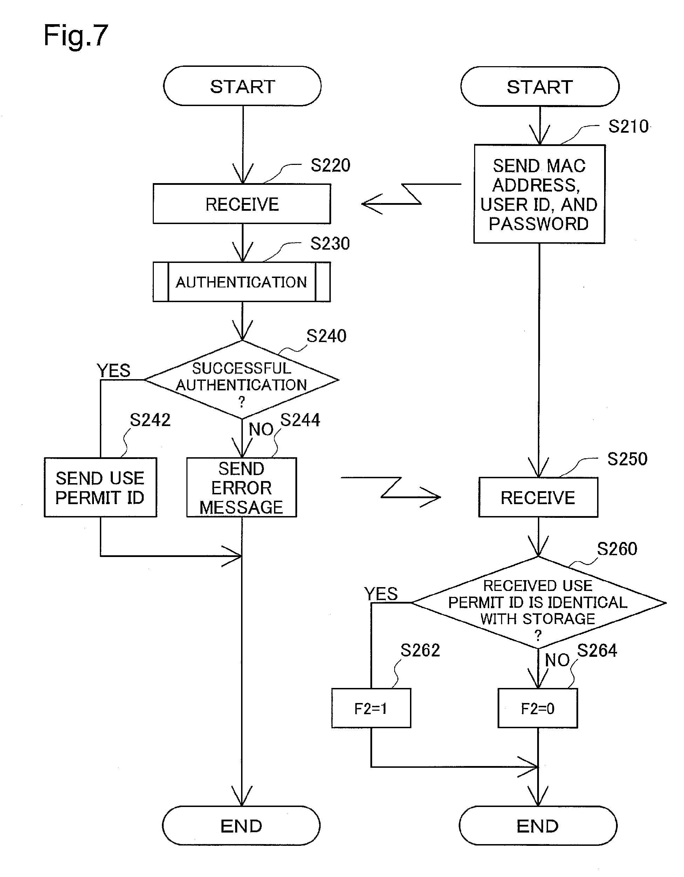

Fig. 7 is a flowchart showing the details of the use permit screening with the use permit ID executed at step S200 in the flowchart of Fig. 5. The left flow shows a series of processing executed by the server 200, and the right flow shows a series of processing executed by the printer 100. The printer 100 first sends the MAC address, the user ID, and the password to the server 200 (step S210). The server 200 receives the MAC address, the user ID, and the password (step S220), refers to the user information for authentication (step S230), and authenticates the user as a registered legal user (step S240). In response to the successful authentication as the legal user, the server 200 sends the use permit ID allocated to the MAC address to the printer 100 (step S242). In response to the failed authentication, on the other hand, the server 200 sends an error message to the printer 100 (step S244).

The printer 100 receives either the use permit ID or the error message (step S250). On the reception of the use permit ID, the received use permit ID is compared with the use permit ID stored in advance in the printer 100. When the received use permit ID is identical with the storage, that is, when the received use permit ID is legal, the printer 100 sets a value '1' to the flag F2 (F2 =1) to approve the use of the printer 100 (step S262). When the error message is received or when the received use permit ID is different from the use permit ID stored in advance in the printer 100, the printer 100 sets a value '0' to the flag F2 (F2 =0) to prohibit the use of the printer 100 (step S264). One modified procedure may omit the comparison of the use permit ID received from the server 200 at step S250 with the use permit ID stored in advance in the printer 100 but unconditionally assume the received use permit ID as legal and set the value '1' to the flag F2 (F2 =1) to approve the use of the printer 100.

In this embodiment, this use permit screening is executed on every power supply to the printer 100. The use permit screening may alternatively be executed only in the occasion of the user's initial setting of the printer 100.

### D. Accounting Process

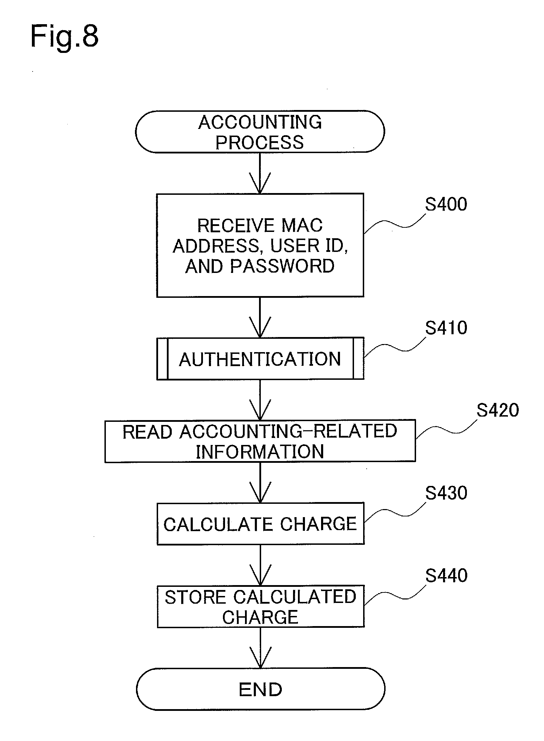

Fig. 8 is a flowchart showing an accounting process executed by the accounting module 280 included in the server 200. The server 200 first receives the MAC address, the user ID, and the password from the printer 100 (step S400) and executes authentication (step S410). The server 200 then reads the consumption of ink managed by the accounting-related information management module 160 of the printer 100 (step S420), calculates a charge (step S430), and stores the calculated charge in the user information management module 260 (step S440).

As described above, the printer 100 of the embodiment does not work without entry of the use permit ID, which is allocated to the MAC address of the printer 100. Only the authorized user legally registered in the service center has the use permit ID. This effectively excludes the use of the printer 100 by any illegal user. The printer 100 executes the printing operation only with the dedicated ink cartridge 300 for the printer rental service. Only the authorized user receives this dedicated ink cartridge 300. This effectively excludes the use of any unauthenticated ink cartridge. This arrangement guarantees the adequate use of the printer 100 by the legal user. The service center provides the legal user with the rental printer 100 and gives adequate maintenance support of the printer 100. The limitation of the use of the printer 100 to the legal user prevents any illegal sale of the printer 100, which may be rented at no charge.

### E. Modifications

The embodiment and its modifications discussed above are to be considered in all aspects as illustrative and not restrictive. There may be many other modifications, changes, and alterations without departing from the scope or spirit of the main characteristics of the present invention. Some examples of possible modification are given below.

### E1. Modified Example 1

The system of the above embodiment executes both the authentication of the ink cartridge and the use permit screening with the use permit ID to determine approval or prohibition of the use of the printer 100. The approval or prohibition may be determined according to either one of the result of the authentication and the result of the use permit screening. In the structure of the above embodiment, the printer 100 executes the printing operation only with the dedicated ink cartridge 300 for the printer rental service. The printer 100 may be designed to execute the printing operation even with a conventional ink cartridge available from any general store. A greater number of criteria may be set for the approval or prohibition of the use of the printer 100.

### E2. Modified Example 2

The system of the embodiment uses only the delivery channel information for the authentication of the ink cartridge to determine approval or prohibition of the use of the printer 100. The ink type and the remaining ink level may additionally be used for the authentication.

### E3. Modified Example 3

In the structure of the embodiment, the printer 100 establishes communication with the server 200 and executes the use permit screening with the use permit ID. This procedure is, however, not restrictive. The printer 100 may not include the communication module 110, and the processing of steps S210 to S250 may be omitted from the processing flow of Fig. 7. This modified procedure receives the user's manual entry of the use permit ID from the keyboard or the operation panel and compares the entered use permit ID with the use permit ID stored in advance in the printer 100 for the use permit screening.

### E4. Modified Example 4

The system of the embodiment refers to the cartridge information and the use permit ID to determine the approval or the prohibition of the use of the printer 100. One modified procedure may approve the use of the printer 100 when the printer 100 successfully establishes communication with the server 200 and sends the MAC address of the printer 100 to the server 200. The communication with the server 200 locates the printer 100. An illegal user generally hesitates to have such communication with the server 200. This arrangement thus prevents the use of the printer 100 by any illegal user.

### E5. Modified Example 5

The system of the embodiment executes the use permit screening with the use permit ID. The use permit ID may be replaced by a program for approving the use of the printer 100. For example, this program is sent from the service center to each legal user and is installed in the printer 100 to activate the printer 100. The preferable procedure sets an expiration date in the program as the use permit information. This arrangement desirably prevents any illegal sale of the printer 100 with approval for the use.

### E6. Modified Example 6

The ink cartridge 300 of the above embodiment has the non-contact IC 310. The ink cartridge may alternatively have a contact IC.

### E7. Modified Example 7

The above embodiment regards the inkjet printer with the ink cartridge as the printing device of the invention. The technique of the invention is, however, not restricted to such inkjet printers, but is also applicable to laser printers with toner cartridges, copying machines, and diversity of other printing devices.

### Industrial Applicability

The technique of the invention is applicable to maintenance support of printers rented by users.

## Claims

1. A printing device, comprising:
an identification information storage module that stores a predetermined piece of identification information for identifying the printing device;
a use permit information input module that receives an entry of a predetermined piece of use permit information, which is correlated to the identification information and is authorized for approval of use of the printing device; and
a control module that prohibits the use of the printing device in the case of unauthorized use permit information.

2. A printing device in accordance with claim 1, the printing device further comprising:
a communication module that makes preset communication with a specific server via a network,
the communication module sending the identification information to the specific server and receiving the use permit information from the specific server.

3. A printing device, comprising:
an identification information storage module that stores a predetermined piece of identification information for identifying the printing device;
a communication module that transmits the identification information to a specific server via a network; and
a control module that approves use of the printing device on completion of the transmission of the identification information.

4. A printing device in accordance with either one of claims 2 and 3, the printing device further comprising:
an authentication information input module that receives an entry of a predetermined piece of authentication information, which is used to certify an authorized use of the printing device,
wherein the communication module sends the authentication information to the specific server and receives a result of authentication based on the authentication information from the specific server, and
the control module prohibits the use of the printing device when the result of authentication shows failed certification of the authentication information.

5. A printing device in accordance with any one of claims 2 through 4, the printing device further comprising:
an accounting-related information management module that manages a predetermined piece of accounting-related information, which is used in a specified accounting procedure executed by the specific server to charge for the use of the printing device,
wherein the communication module additionally sends the accounting-related information to the specific server.

6. A printing device with a cartridge of a printing material attached thereto,
the cartridge having a storage element that stores a predetermined piece of cartridge information for identifying a delivery channel of the cartridge,
the printing device comprising:
an information acquisition module that acquires the cartridge information from the storage element of the cartridge; and
a screening module that approves or prohibits use of the printing device, based on the acquired cartridge information.

7. A printing device in accordance with claim 6, wherein the screening module approves the use of the printing device when the cartridge information represents a selected delivery channel.

8. A printing device in accordance with claim 6, wherein the screening module prohibits the use of the printing device when the cartridge information does not represent a selected delivery channel.

9. A printing device in accordance with any one of claims 6 through 8, the printing device further comprising:
an accounting-related information management module that manages a predetermined piece of accounting-related information, which is used in a specified accounting procedure executed by a specific server to charge for the use of the printing device; and
a communication module that sends the accounting-related information to the specific server.

10. A cartridge for keeping a printing material therein,
the cartridge having a storage element that stores a predetermined piece of cartridge information for identifying a delivery channel of the cartridge.

11. A cartridge in accordance with claim 10, wherein the storage element additionally stores a type of the printing material.

12. A cartridge in accordance with claim 10, wherein the storage element additionally stores a remaining quantity of the printing material.

13. A cartridge in accordance with claim 12, the cartridge further comprising a remaining quantity measurement module that measures the remaining quantity of the printing material.

14. A cartridge in accordance with claim 10, wherein the storage element is a non-contact IC.

15. A control method of a printing device, where a predetermined piece of identification information is allocated to the printing device for identifying the printing device,
the control method comprising the steps of:
(a) acquiring a predetermined piece of use permit information, which is correlated to the identification information and is authorized for approval of use of the printing device; and
(b) prohibiting the use of the printing device in the case of unauthorized use permit information.

16. A control method of a printing device, where a predetermined piece of identification information is allocated to the printing device for identifying the printing device,
the control method comprising the steps of:
(a) transmitting the identification information to a specific server via a network; and
(b) approving use of the printing device on completion of the transmission of the identification information.

17. A control method of a printing device with a cartridge of a printing material attached thereto,
the cartridge having a storage element that stores a predetermined piece of cartridge information for identifying a delivery channel of the cartridge,
the control method comprising the steps of:
(a) acquiring the cartridge information from the storage element of the cartridge; and
(b) approving or prohibiting use of the printing device, based on the acquired cartridge information.

18. A recording medium in which a computer program for controlling a printing device is recorded, where a predetermined piece of identification information is allocated to the printing device for identifying the printing device,
the computer program causing a computer to attain the functions of:
acquiring a predetermined piece of use permit information, which is correlated to the identification information and is authorized for approval of use of the printing device; and
prohibiting the use of the printing device in the case of unauthorized use permit information.

19. A recording medium in which a computer program for controlling a printing device is recorded, where a predetermined piece of identification information is allocated to the printing device for identifying the printing device,
the computer program causing a computer to attain the functions of:
transmitting the identification information to a specific server via a network; and
approving use of the printing device on completion of the transmission of the identification information.

20. A recording medium in which a computer program for controlling a printing device with a cartridge of a printing material attached thereto is recorded,
the cartridge having a storage element that stores a predetermined piece of cartridge information for identifying a delivery channel of the cartridge,
the computer program causing a computer to attain the functions of:
acquiring the cartridge information from the storage element of the cartridge; and
approving or prohibiting use of the printing device, based on the acquired cartridge information.
